# EUROPEAN PATENT SPECIFICATION

(11) **EP 0 573 111 B1**
(45) Date of publication and mention of the grant of the patent: **28.04.1999**
(21) Application number: 93201535.7
(22) Date of filing: 28.05.1993
(51) Int. Cl.: A01B 49/02, A01B 59/043, A01B 29/06

(54) **A soil cultivating machine**
Bodenbearbeitungsmaschine
Machine à travailler le sol

(30) Priority: 01.06.1992 NL 9200959
(43) Date of publication of application: 08.12.1993
(73) Proprietor: C. van der Lely N.V., 3155 PD Maasland (NL)
(72) Inventor: van der Lely, Olaf, CH-6312 Steinhausen (CH)
(74) Representative: Corten, Maurice Jean F.M.

(56) References cited:
- EP-A- 0 120 415
- EP-A- 0 153 765
- CH-A- 483 189
- DE-A- 2 219 278
- DE-A- 3 541 543
- DE-U- 7 123 427
- FR-A- 2 536 948
- US-A- 3 311 175
- US-A- 4 378 052

## Description

The invention relates to a soil cultivating machine, comprising a frame provided with soil working members and a roller, whereby at each side of the machine there is an arm extending between said frame and said roller, and a detachable connection comprising a quick coupling consisting of a pin extending through apertures belonging to the roller and the arms of the machine.

Such a machine is well-known, e.g. the Culti-Tiller from Kuhn. This machine is provided with a roller to which two arms are connected with the aid of three bolts. Each of the arms is pivotally connected to a cultivator with the aid of a pin acting as a pivot at each side to the cultivator. The pins being used as pawls are kept in position by a transverse locking pin for each pawl which is put through a hole in the pawl.

In view of the fact that the roller must be pivotally in height about the pivots formed by the pawls. In order to adjust the position of the roller with respect to the cultivator, the cultivator has two U-formed braces through which the arms are extending. The arms can either be fixed to the brace by a pawl extending through openings in the downwardly extending legs of the braces or can be moved freely up and down to a chosen limit. In order to allow this up and down movement of the arms in the braces, there is a free play between the legs of the braces and the arms. If the farmer wishes to use an other type of roller behind the cultivator having this construction he must either loosen three bolts and nuts at each arm or find a roller having similar arms. This is both complicated as well as expensive. Moreover the pins used as pawls are more expensive to manufacture than pins which are only used for fixation.

It is the aim of the invention to improve the system to change rollers to the machine.

According to one aspect of the invention each arm includes a tapered holder which defines an upwardly extending space, which is open at the upperside, for accommodating therein a fitting portion of the roller, after which the pin of the quick coupling can be inserted in the apertures, such that the parts have a fixed position to another.

According to a second aspect of the invention, having the same advantages, the free ends of the arms are provided with open jaws which can accommodate a sub axle of an arm portion of the roller, after which the pin of the quick coupling can be inserted in the apertures, such that the parts have a fixed position to another.

From the French patent 83 19118 (2 536 948) a roller is known on which a sowing machine is mounted. on the frame of this combined roller and sowing machine a trestle for a three point hitch is mounted, by which this combined roller and sowing machine can be coupled to a rotary harrow. This system is not suitable for changing a number of different rollers to a harrow, but is destined to couple the combined roller and sowing machine directly to a tractor.

In the European patent application 0 120 415 a quick coupling is described with the aid of which agricultural machines can be coupled to a tractor.

In the German utility model 7 123 427 a coupling between a roller and a ground working machine is described, in which the roller is provided with arms with the aid of which these arms can be fastened to the machine with one pin situated at each side of the machine.

In the German patent application DE-A-35 41 543 a tractor is shown to which a set of ground working rollers can be connected to the three point hitch of the tractor. The set of rollers is at one point pivotally connected to a frame and at another point with the aid of a rod and nut. There is not a quick coupling described in this publication and the change of a roller for another one, if possible, is complicated.

The invention makes it possible to equip the machine in a simple and fast manner with a roller suitable for the soil or the prevailing circumstances.

In accordance with the invention, an advantageous construction is obtained when a quick coupling is provided on the arms of the roller. In accordance with the invention, the quick coupling is operable under the control of spring force, more specifically from the seat of a tractor coupled to the machine.

For a better understanding of the invention and to show how the same may be carried into effect, reference will now be made, by way of example, to the accompanying drawings, in which:
Figure 1 is a plan view of a machine in accordance with the invention, coupled to the lifting device of a tractor, and, positioned, therebehind, a stand for sustaining a coupled roller:
Figure 2 is a side view taken in the direction of the arrow II in Figure 1;
Figure 3 shows, to an enlarged scale, a portion of the side view of Figure 2 and also illustrates the method of coupling a roller;
Figure 4 is a plan view taken in the direction of the arrow IV in Figure 3;
Figure 5 is a plan view of a second embodiment of the machine in accordance with the invention;
Figure 6 is a side view taken in the direction of the arrow VI in Figure 5;
Figure 7 is a plan view of a portion of a third embodiment of the machine in accordance with the invention;
Figure 8 is a side view of a fourth embodiment of the machine in accordance with the invention;
Figure 9 is a side view of a fifth embodiment of the machine in accordance with the invention.

Corresponding components in the drawings have been given the same reference numerals. In addition, the invention is in no way limited to the embodiments depicted and described here; they only serve by way of illustration of the inventive idea.

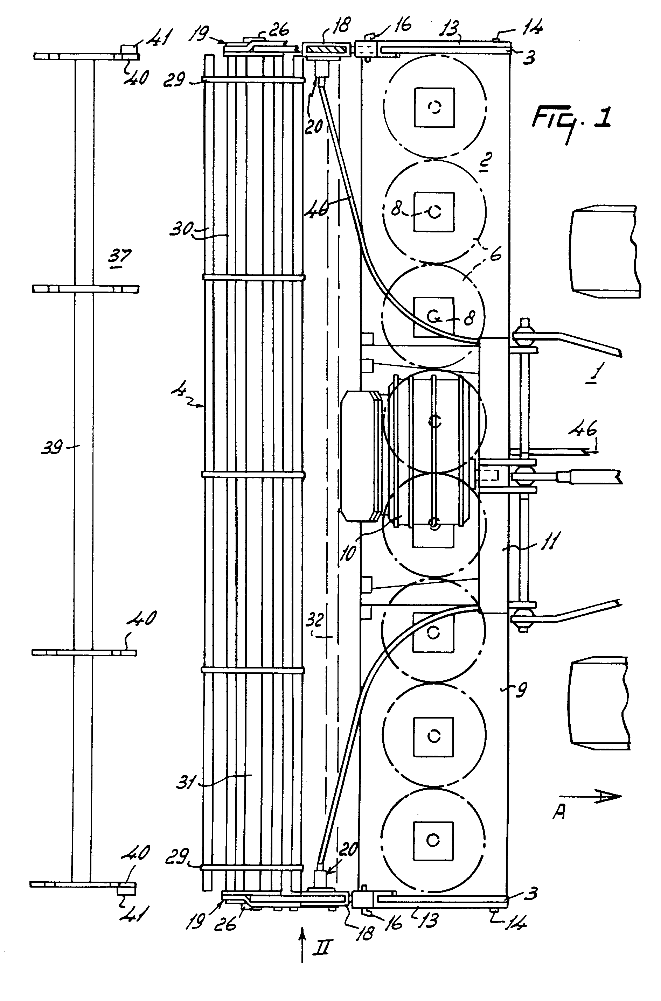

Figure 1 shows, coupled to the lifting device 1 of a tractor, a rotary harrow 2, alternatively denoted a p.t.o.-driven rotary harrow, to the rear side of which a roller 4 is coupled via a pair of arms 3. The p.t.o. driven rotary harrow 2 is a known per se soil cultivating implement for the secondary soil cultivation which, having a width of three meters in the present embodiment, is equipped with eight soil working members 7 which are in meshing connection with each other via gearwheels 6. The machine is operative in the direction of travel A. The soil working members 7 are rotatable and drivable about upwardly directed shafts 8. The gearwheels 6 each have a diameter of well over 35 cms and are arranged in a box-like frame 9 of the p.t.o.-driven rotary harrow and are disposed on the uppermost end of the upwardly directed shafts 8, which extend through the bottom of the frame and are bearing-supported relative to the frame 9. The frame 9 includes the arms 3 for the roller 4 and together with the soil working members 7 and the trestle 11 constitutes the harrow section of the machine. One of the two centremost shafts 8 further extends through the upper side of the box-like frame 9 to the interior of a gear box 10 which is mounted on the frame and an outgoing stub axle of which may be coupled via a coupling shaft to the power take-off shaft of a tractor for the purpose of driving the soil working members 7. In addition, the machine includes a trestle 11, disposed in the midway point on the upper side of the frame 9, for coupling to the three-point lifting device 1 of a tractor. At both ends, the box-like frame 9 is closed by an upwardly directed plate 13 which extends over the frame 9 and to which the arms 3 are pivotably connected. The connection of the arms 3 to the plate 13 includes a pivot shaft 14 which at the upper side of the frame 9 is passed through the end plate 13. By means of a locking pin 16 which can be inserted through a plurality of apertures 15 provided in the plate 13 at the rear side of the machine, the height of the frame 9 can be adjusted relative to the roller 4. The locking pin 16 can act as a stop for the adjustment of a free movement about the shaft 14, but, with the aid of an aperture in the arms 3, can also be used to lock the arms in the region of one of the apertures 15.

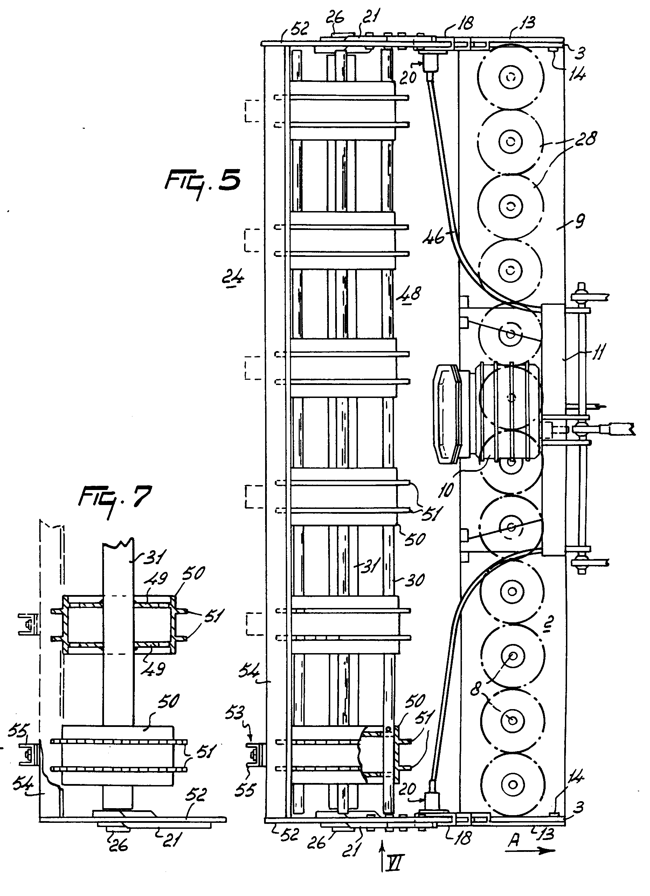

At a rearmost end, the arms 3 are equipped with a cup-like holder 18, in which a hook-like coupling member 19 of the roller 4 is accommodated with a fit. The holder 18 and the coupling member 19 of the roller 4 are rigidly locked relative to each other by means of a quick coupling 20. The holder 18 is designed as a rectangular sleeve which is open at its upper and lower sides and tapers at two sides, in the present case the leading and trailing side. The upper side of the holder 18 extends obliquely downwardly and rearwardly. The hook-like coupling member 19 of the roller 4 encompasses an arm portion 21 which extends obliquely upwardly and forwardly, against which, arranged in a vertical plane and in the direction of operative travel, a hook-like plate 22 is provided. Near its rear end, the hook-like plate 22 is provided with apertures 23, to which optionally a reinforcing bar can be applied between the arm portions 21. This construction renders it possible to use the hook-like coupling member 19 also with an entirely or partly closed roller, as shown in Figures 5 to 7 and 9, in which such a connecting bar simultaneously constitutes the carrier for scraper members 24. The arm portions 21 are connected in known manner to a stub axle 27 of the roller 4 via a bearing housing 26. Then, as is shown in the plan view of Figure 4, the arm portion 21 is inwardly folded within the periphery of the roller, so that the bearing housing 26 and the stub axle 27 do not extend to beyond the width limit of three metres stipulated by law in many countries.

The stub axle 27 of the cage roller 4 is fitted to a vertical, circular carrier 29 for the rods 30, which carrier extends in the direction of operative travel.

The cage roller includes five carriers 29, which are provided equidistantly about a central tube 31 of the roller 4. Between the soil working members and the roller 4 a crumbling and levelling plate 32 extends transversely to the direction of operative travel A, as is illustrated in Figure 1. In the drawings, the crumbling plate 32 is connected capably of adjustment in height to the frame in a manner not further shown.

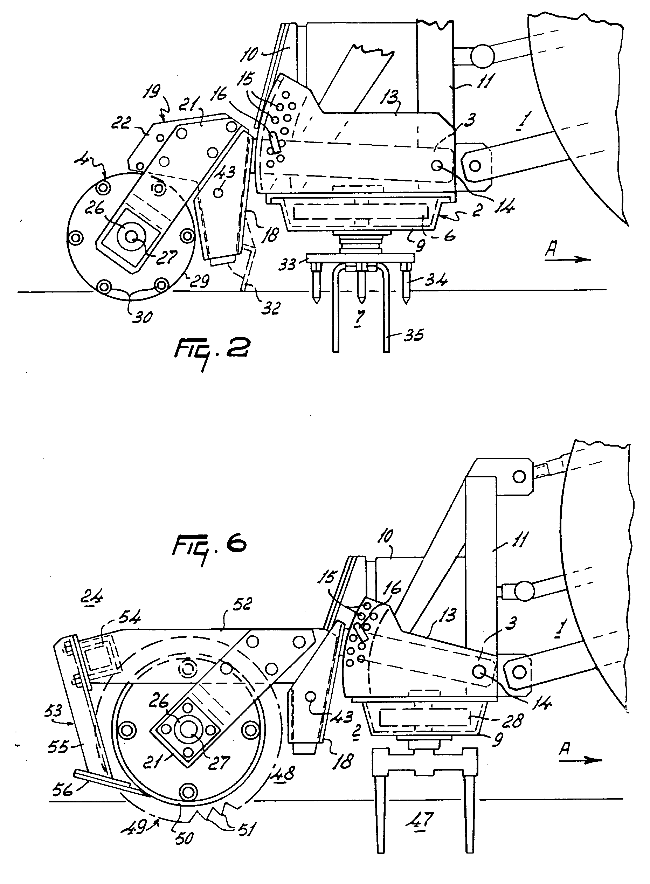

As is shown in Figure 2, a soil working member 7 incorporates a disc-like carrier 23, whose diameter is slightly less than that of an associated gearwheel 6. At the bottom side of a carrier 33 and near the periphery, four relatively short tines 34 are uniformly distributed. The length thereof amounts to approximately one third of the diameter of the disc-like carrier 33. Approximately halfway the radius of a carrier 33, a pair of relatively longer tines is provided diametrically opposite each other. The tines 34, 35 extend approximately vertically below the carrier and constitute together with the carrier 33 a soil working member 7.

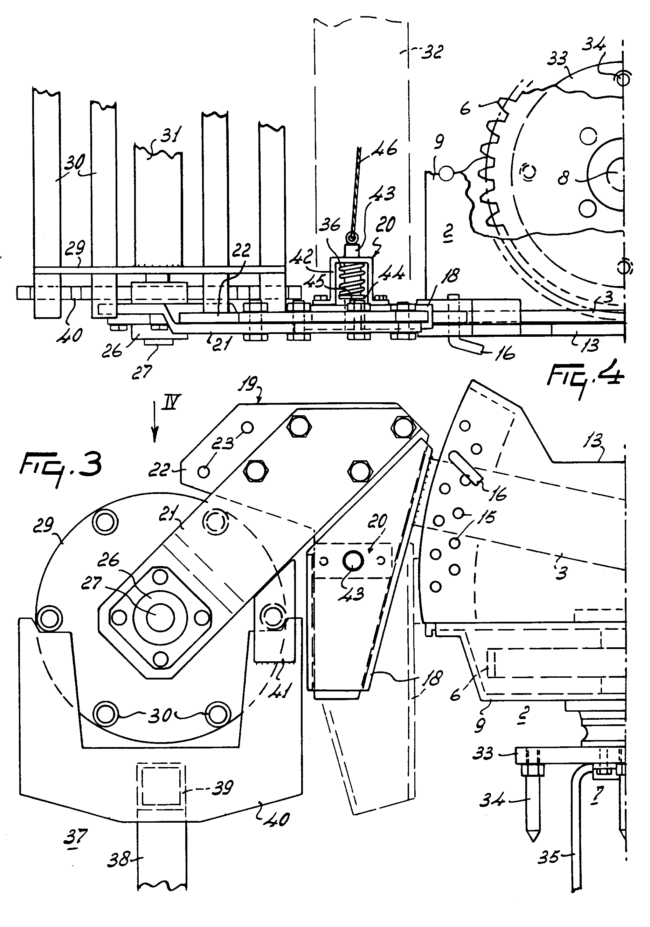

As is shown in Figure 3, a roller 4 bears on a stand 37 during coupling or decoupling. This stand 37 comprises a pair of vertical legs 38 which together with horizontal connecting beams 39 forms a lattice. A stand 37 extends through the length of a roller 4. Near the ends, a stand 37 has bifurcated supports 40. A support 40 comprises two prongs which are blunt at their upper side to provide a carrier plane for the rods 30 of a roller 4. The facing sides of the prongs converge in the downward direction and near their base have a mutual spacing which approximately corresponds to the spacing between the remote sides of two rods 30. The bifurcated supports 40 are located between an outer carrier 29 for the rods 30 of the roller 4 and the bearing housing 26. One of the prongs of a support 40 is provided with a further support 41 for supporting an arm portion 21 of a roller 4 positioned in the stand 37. To that end, the further support 41 extends from its welded connection to the support 40 obliquely upwardly and is of such a length that an obliquely arranged end face bears against the lower face of the arm portion 21.

As is shown inter alia in Figure 4, the quick coupling 20 includes inter alia a housing 42 which is secured by means of lugs and screws to the cup-like holder 18 and which, in a cross-sectional view, has a U-shaped profile. In the base of this U-shape, the housing 42 is provided with an aperture, through which a pin 43 is passed with a fit. In the housing 42, a pressure spring 36 is applied between the base of the U-shaped profile and a stop 44 around the pin 43. The stop 44 is constituted by a ring which is placed around the pin 43 and is retained by a key 45 passed through the pin 43. That part of the pin 43 that at the inside of the machine projects from the housing 42 is provided with an eye, to which a flexible tensile element 46 is connected. The flexible tensile element 46, in the present case a length of rope, is inserted near the midway point and at the rear side of the frame portion 9 through an eye fitted to the frame 9 and further via the trestle 11 of the machine to the region of the seat of a tractor coupled to the machine.

Figure 5 shows an embodiment of the machine provided with twelve soil working members 47 and a similar number of gearwheels 28, which work the same width of three metres. The tines of the soil working members 47 are tangentially arranged relative to the rotary axis of a soil working member 47 at an angle with a vertical. As a result thereof. the lowermost portions of the tines of adjacent soil working members have soil working paths which overlap each other. In this embodiment, the frame 9 is coupled to a hybrid roller 48. A hybrid roller is a roller in which constructive and functional features of a cage roller, of the type as shown e.g. in Figure 1, and of a closed tube roller, alternatively denoted packer roller, are combined. the roller 48 is provided with six pairs of carriers 49. The carriers 49 support four rods 30 which near the periphery of the carriers 49 are inserted through apertures and extend in the longitudinal direction of the roller 48. In addition, each pair of carriers 49 supports also a cylindrical segment 50 of a closed tube roller. Each cylindrical roller segment 50 is provided with two crowns of cams 51 positioned at some distance from each other. The roller 48 is further coupled in the manner in accordance with the embodiment of Figures 1 to 4 to the harrowing section of the machine. In the present embodiment, a hook-like coupling plate 52 then extends rearwardly to beyond the periphery of the roller 48. Arranged between the free ends of the coupling plates 52 is a scraper device in the form of a carrier 54 designed as a quadrangular beam for scraper members 24. The scraper member 24 includes a support 55 which is clamped against the carrier 54. A scraper plate 56 is fitted to the lowermost end of a support 55. A scraper member 24 is always positioned behind a closed roller segment 50 and a scraper plate 56 extends through the width of a segment 50. A scraper plate 56 is provided with serrations, by means of which the scraper plate 56 scrapes the two sides of a crown of cams in addition to the periphery of the closed roller segment 50. The closed roller segments 51, and consequently the carriers 49, are arranged such that the midway point of a roller segment 50 is positioned, in the direction of operative travel A, behind the point of contact of two gearwheels 28 which mesh in the forward direction. A rod 30 is retained by means of locking pins which, bounding on the outer side of the two outermost carriers 49, are inserted through the rod. After one of the locking pins has been removed, a rod 30 can be pulled from the roller, which results in a roller 62 which can operate as illustrated in Figure 7.

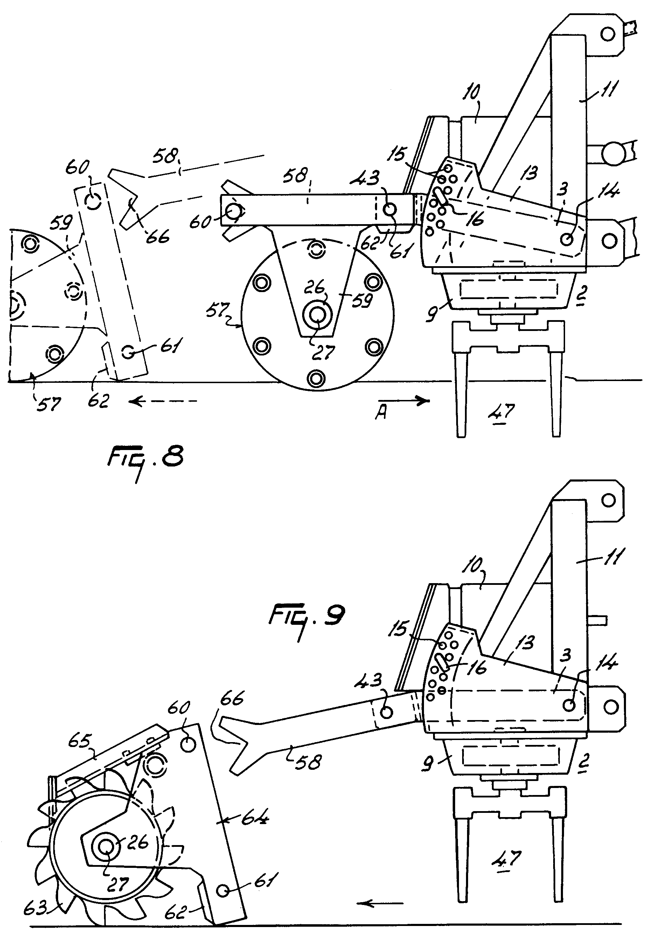

Figures 8 and 9 show an embodiment in which a roller 57, 63 can be coupled via a quick coupling to the harrow section of the machine without a stand being required. In this embodiment, the harrow section of the machine has two arms 58 which extend rearwardly to beyond the periphery of the roller 57, 63. The free end of the arms 58 is provided with open jaws 74, in which can be accommodated a stub axle 60 of the arm portion 59 of the roller 57, 63 which extends horizontally and transversely to the direction of travel. A quick coupling implement is provided between the roller 57 and the harrow section of the machine at the interior side of the arms 58. The arm portion 59 of the roller 57 is, in a side view, in the shape of a T, the lower end of the T being connected to the shaft of the roller 57 via a bearing housing. The rearmost end of the T-shaped arm portion 59 is provided at the interior side with the stub axle 60. The third and leading end of the T-shaped arm portion 59 is provided with a bore 61 and a stop 62 which extend horizontally and to the interior of the machine. In the embodiment shown in Figure 9, a closed roller, alternatively denoted packer roller, 63 is shown. Between the rearmost ends of the arm portion 64 and at the bottom side of the stub axle 61 a scraper element 65 is arranged. In all other respects the arm portion 64 corresponds as regards its construction to the arm portion 59 of the embodiment shown in Figure 8. In the coupled state, the arms 58 bear at the inner side of the machine against the arm portions 59 of the roller.

The mode of operation of the machine in accordance with the present invention will now be described hereinafter.

Using the embodiment shown in Figure 1 of the soil cultivating machine, it is possible to exchange the roller behind the harrow section of the machine in a smooth manner. This may be desirable when different types of soil, e.g. a light and a heavy type of soil, are to be worked with the same machine. So as to obtain in all cases an optimum working result, an adapted roller must be used. To uncouple a roller, the machine is lifted with the aid of the lifting device of the tractor carrying the machine to a position higher than the height of the stand 37. After the roller has been manoeuvred to over the stand, the tractor driving in reverse, the driver unlocks the hook-like coupling member 19 of the holder 18 by tugging the cord 46. Thereafter he lowers the machine. This results in the roller coming to bear by means of two diametrically opposite rods 30 on the upper ends of the stand, while in the meantime two lower and intermediate rods 30 have been guided within the U-profile of the bifurcated support 40. The guide inside the bifurcated support 40 results in a correct positioning and a stable seat on the stand 37. When the lifting device is lowered still further, the hook-like coupling member 19 of the roller arrives in its ultimate position, after the arm portion 21 has come to bear against the further support 41 of the stand. Thereafter the holder 18 slides from the hook-like plate, causing the circular path of the holder 18 about the pivot shaft 14 to be taken up by any convexities of the hook-like plate 22 and/or the hook-like coupling member 19 to deflect briefly to the rear about the shaft 27 of the roller. After the holder 18 has completely dropped by means of its rearmost end to under the hook-like coupling member 19, the harrow section of the machine can be driven away by the tractor in the forward direction. Thereafter a different roller can be coupled to the lifting device by performing the same operations in the inverse sequence. The height of the stand is such that below the hook-like coupling member of the roller 4 there is sufficient room to allow a holder 18 bearing on the frame to be driven away from under a hook-like coupling member without the tines 35 of the soil working members coming into contact with the ground. To allow the above method to be performed, the machine in accordance with the invention can also be equipped with a conically shaped holder. The plate 22 is provided at its rigid end with a fitting cone, whilst the quick coupling 20 is applied on the holder via an adapted intermediate member.

In the embodiment shown in Figures 8 and 9, the roller 57, 73 bears on the soil and a jaw-shaped end 66 of the arms 58 are moved up against the pawl 60. When the machine is driven still further to the rear, the arm portion 59 and 64 of a roller 57, 63 rotates about the shaft 27 until the stop 62 abuts against the bottom side of the arm 58. The until then extended pin 43 of the quick coupling 20 is then released and locked via the aperture 61 in the arm portion of the roller 57, 63, whereafter the roller 57, 63 is locked relative to the arms 58. In this situation, the stub axle 60 is pushed up against the edges of the open jaw 66, while the two arms 58 both bear by means of their outermost side plane against an arm portion 59. In the coupled state, the arm portions 59 thus form a rigid integral whole with the arms 58. The theoretical possibility that a roller 57, 63 rolls away during coupling when the above-described method is used, is eliminated in practice by the unevennesses which are usually inherent to the farm yard or the field. In a barn or on a smooth, reinforced soil it is sufficient to place a brick or some type of block behind the roller to prevent a rolling away.

In one of the above-described manners the harrow section of the machine can, for example, be coupled to a roller 48, 62 in accordance with the embodiment shown in Figure 6 or 7. The rollers 48, 62 described here are particularly suitable for crops such as corn or beet roots, which can be sown with an ample spacing between the rows. The often used spacing of approximately 50 cms can be used with advantage more specifically with the harrow section in accordance with the embodiment shown in Figure 5. The rearward jet of earth produced by two rotors 47 which at the front side rotate towards each other, is caught by the closed cylindrical roller segment 50. This results in that region in an adequate crumbling of the seed bed. Simultaneously in the same region, i.e. in a strip equal to the width of the closed roller segment, the seed bed is advantageously compressed. between the closed roller segments 50, the seed bed is not compressed in the embodiment shown in Figure 7 or to a less extent in the embodiment shown in Figure 5. This has for its effect that the seed bed is only adequately compressed in strips left behind by the closed roller segments 50, to guarantee a capillary flow of moisture from the plough bottom to the seed layer, and to offer in that region a sufficient solidity to the roots of the plants grown from the seed. Seed bed preparation with the aid of a roller in accordance with the present invention has the advantageous effect that the favourable conditions desired for the growth of plants, are only created in those strips in which in due time the growth of a crop is desired. The invention therefore also relates to a soil cultivating machine equipped with a seed drill, wherein the seed is deposited behind the closed segments of the roller in accordance with the present invention. The crop sown with such a machine and in accordance with the above-described method can develop faster and with greater resistance than weeds between the drilled rows. In addition to this lead in development of the sown plants compared with any wildshoots between the rows, such a manner of seed bed preparation also has the advantage that hoeing and/or spraying between the rows is more effective than in the case of weeds which developed in favourable soil conditions.

The method described above can be still further refined with the aid of the harrow in accordance with the embodiment of Figure 1. To that end, the tines 35 are directed substantially vertically and are disposed at a comparatively small distance from each other. Preferably, this mutual distance is approximately equal to, or slightly less than, the width of a closed roller segment 50. In this manner it is achieved that the soil is worked only in strips through the overall root zone of the seed bed. Such a machine produces a seed bed which provides for the desired plants sown in the worked strip, favourable soil conditions compared with weeds developing between the drilled strips. In addition, the power required for such a machine is very advantageous, whilst still an optimum seed bed can be created. The smaller tines 34 at the periphery of a carrier 33 act namely only superficially and have inter alia the effect that weeds already growing there are destroyed. The large spacing between the tines 35 of two adjacent soil working members 7 renders the machine in accordance with the present invention also less sensitive, compared with the prior art machines of which the paths of the ends of the tines overlap, to jamming of the machine or damage caused by stones in the ground. The present embodiment is further equipped with a crumbling bar 32. In addition to an advantageous crumbling, the unequal height between a worked strip and a non-working strip can be levelled with the aid of this bar.

## Claims

1. A soil cultivating machine (2) comprising a frame (9), provided with soil working members (7) and a roller (4), whereby at each side of the machine there is an arm extending between said frame (9) and said roller (4), and a detachable connection comprising a quick coupling (20) consisting of a pin (43) extending through apertures belonging to the roller and the arms (3) of the machine, characterized in that each arm (3) includes a tapered holder (18) which defines an upwardly extending space, which is open at the upperside, for accommodating therein a fitting portion of the roller, after which the pin (43) of the quick coupling can be inserted in the apertures belonging to the roller and the arms (3), such that the parts have a fixed position to another.

2. A soil cultivating machine (2) comprising a frame (9), provided with soil working members (47) and a roller (57), whereby at each side of the machine there is an arm (58) extending between said frame (9) and said roller (57), and a detachable connection comprising a quick coupling consisting of a pin (43) extending through apertures (61) belonging to the roller and the arms (3) of the machine, characterized in that the free ends of the arms (58) are provided with open jaws (66) for accommodating a sub axle (60) of an arm portion (59) of the roller (57), after which the pin (43) of the quick coupling can be inserted in the apertures (61) belonging to the roller and the arms (3), such that the parts have a fixed position to another.

3. A soil cultivating machine as claimed in one or more of the preceding claims, characterized in that the quick coupling (20) can be operated from the seat of a tractor to which the machine is coupled.

4. A soil cultivating machine as claimed in anyone of the preceding claims, characterized in that the fitting portion (19, 52) of the roller (4, 48) is locked in the holder (18) by means of a quick coupling (20) fitted to the holder (18).

## Patentansprüche

1. Bodenbearbeitungsmaschine (2) mit einem Rahmen (9), der Bodenbearbeitungsglieder (7) und eine Walze (4) aufweist, wobei auf jeder Seite der Maschine ein sich zwischen dem Rahmen (9) und der Walze (4) erstreckender Arm sowie eine lösbare Verbindung mit einer Schnellkupplung (20) vorgesehen ist, welche aus einem Stift (43) besteht, der in zu der Walze und den Armen (3) der Maschine gehörende Öffnungen eingesetzt ist, dadurch gekennzeichnet, daß jeder Arm (3) einen verjüngten Halter (18) aufweist, der einen aufwärts gerichteten Raum definiert, welcher an der Oberseite offen ist, um ein Verbindungsstück der Walze aufzunehmen, wonach der Stift (43) der Schnellkupplung in die zu der Walze und den Armen (3) gehörenden Öffnungen einsetzbar ist, so daß die Teile relativ zueinander festgelegt sind.

2. Bodenbearbeitungsmaschine (2) mit einem Rahmen (9), der Bodenbearbeitungsglieder (47) und eine Walze (57) aufweist, wobei auf jeder Seite der Maschine ein sich zwischen dem Rahmen (9) und der Walze (57) erstreckender Arm (58) sowie eine lösbare Verbindung mit einer Schnellkupplung vorgesehen ist, welche aus einem Stift (43) besteht, der in zu der Walze und den Armen (3) der Maschine gehörende Öffnungen (61) eingesetzt ist, dadurch gekennzeichnet, daß die freien Enden der Arme (58) offene Klauen (66) aufweisen, um einen Zapfen (60) eines Armabschnittes (59) der Walze (57) aufzunehmen, wonach der Stift (43) der Schnellkupplung in die zu der Walze und den Armen (3) gehörenden Öffnungen (61) einsetzbar ist, so daß die Teile relativ zueinander festgelegt sind.

3. Bodenbearbeitungsmaschine nach einem oder mehreren der vorhergehenden Ansprüche, dadurch gekennzeichnet, daß die Schnellkupplung (20) vom Sitz eines Schleppers aus betätigbar ist, an den die Maschine angeschlossen ist.

4. Bodenbearbeitungsmaschine nach einem der vorhergehenden Ansprüche, dadurch gekennzeichnet, daß das Verbindungsstück (19, 52) der Walze (4, 48) in dem Halter (18) mittels einer an dem Halter (18) angebrachten Schnellkupplung (20) festgelegt ist.

## Revendications

1. machine à travailler le sol (2) comprenant un châssis (9) muni d'organes de travail du sol (7) et d'un rouleau (4) dans laquelle, sur chaque côté de la machine, il y a un bras s'étendant entre ledit châssis (9) et ledit rouleau (4) et une liaison détachable comprenant un raccord rapide (20) qui consiste en une broche (43) s'étendant à travers des ouvertures appartenant au rouleau et aux bras (3) de la machine, caractérisée en ce que chaque bras (3) comporte un support (18) de foie tronconique qui définit un espace s'étendant vers le haut, qui est ouvert à son côté supérieur, pour y loger une partie correspondante du rouleau qui s'y ajuste, après quoi la broche (43) du raccord rapide peut être insérée dans les ouvertures appartenant au rouleau et aux bras (3), de telle sorte que les pièces ont une position fixe, l'une par rapport à l'autre.

2. Machine à travailler le sol (2) comprenant un châssis (9) muni d'organes de travail du sol (47) et un rouleau (57), dans laquelle il y a, sur chaque côté de la machine, un bras (58) s'étendant entre ledit châssis (9) et ledit rouleau (57), et une liaison détachable comprenant un raccord rapide qui consiste en une broche (43) s'étendant à travers des ouvertures (61) appartenant au rouleau et aux bras (3) de la machine, caractérisée en ce que les extrémités libres des bras (58) sont munies de mâchoires ouvertes (66) pour y loger un tourillon (60) d'une partie (59) du bras du rouleau (57), après quoi la broche (43) du raccord rapide peut être insérée dans les ouvertures (61) appartenant au rouleau et aux bras (3), de telle sorte que les pièces ont une position fixe, l'une par rapport à l'autre.

3. Machine à travailler le sol, selon une ou plusieurs des revendications précédentes, caractérisée en ce que le raccord rapide (20) peut être actionné à partir du siège d'un tracteur auquel la machine est couplée.

4. Machine à travailler le sol selon l'une quelconque des revendications précédentes, caractérisée en ce que la partie ajustante (19, 52) du rouleau (4, 48) est verrouillée dans le support (18) au moyen d'un raccord rapide (20) monté sur le support (18).
